# EUROPEAN PATENT SPECIFICATION

(11) **EP 3 297 449 B1**
(45) Date of publication and mention of the grant of the patent: **08.05.2019**
(21) Application number: 16728226.8
(22) Date of filing: 17.05.2016
(51) Int. Cl.: A23C 19/082, A23C 19/09

(54) **NEW CHEESE-BASED FOOD PREPARATIONS**
NEUE NAHRUNGSMITTELZUBEREITUNGEN AUF DER BASIS VON KÄSE
NOUVELLES PRÉPARATIONS ALIMENTAIRES À BASE DE FROMAGE

(30) Priority: 18.05.2015 IT UB20151559
(43) Date of publication of application: 28.03.2018
(73) Proprietor: Prodotti Gianni S.r.l., 20138 Milano (IT)
(72) Inventor: BIANCHI, Maurizio, 20138 Milano (IT)
(74) Representative: Gerli, Paolo
(86) International application number: PCT/EP2016/061023
(87) International publication number: WO 2016/184856

(56) References cited:
- EP-A1- 0 289 096
- EP-A1- 2 138 052
- EP-A2- 1 123 658
- WO-A1-97/03572
- WO-A1-2004/064540
- WO-A1-2005/107487
- WO-A1-2008/054232
- WO-A1-2015/069678
- US-A1- 2004 096 564
- DATABASE GNPD [Online] MINTEL; March 2015 (2015-03), ANONYMOUS: "EMMENTAL FLAVOURED VEGE SLICES", XP002749115, retrieved from WWW.GNPD.COM Database accession no. 3029723

## Description

### Application Field

The present invention relates to the field of the food industry. In particular, the invention relates to cheese-based food preparations obtainable both with the traditional use of melting salts, and without the use of melting salts. In particular, but not exclusively, the invention relates to the field of the cheese substitutes, industrially produced, *e*.*g*. in the form of a single portion.

### Prior Art

As it is known, cheese, its derivatives and numerous other foods containing them are among the most globally consumed foods. Many of these foods, intended for mass distribution, are produced in large quantities in a standardized manner on an industrial level. An important group of foods in this field is that of the cheeses offered to the public in formats for easy manipulation, typically in the form of a single portion as mini-cheeses and cheese-based snacks. A further important product category is represented by cheese-based food preparations that are used as semi-finished intermediates in the industrial preparation of countless types of products ready to use (products *ready to cook* and *ready to eat*). Such products require a particular consistency that allows them to be subjected to industrial procedures as slicing, dicing, mincing, and similar operations.

On the other hand, it is known that such foods do not always guarantee a balanced nutrient supply, and often they also contain substances and additives potentially harmful to the human body. These artificial substances are used for example to standardize/improve the rheology of the dough adapting it to heat and mechanical treatments which lead to the formation of slices, single portions, etc.

Among the potentially harmful additives and substances used during the formulation of the above mentioned foods, the melting salts are widely used, such as phosphates, polyphosphates and/or citrates, in particular of alkali metals and/or alkaline-earth metals and hydrates thereof. These salts have the multiple purpose of emulsifying fats, isolating casein, so that this latter can act as surfactant itself and, therefore, produce a stable, homogeneous product also endowed with the desired consistency. However, the use of melting salts makes the final product less attractive to the final consumer, being this latter even more conscious about health and food security; also, it can result in an undesired level of quality of the product, e.g. forming crystals and segregation areas, due to the limited solubility of such salts. In addition, complications are possible during the production process such as, for example, the demixing of the fatty phase from the aqueous phase, caused by an incorrect choice of the melting salt or the quantity thereof, in association with the pH conditions. On the other hand, it is particularly difficult to industrially produce a cheese having a determined consistency without the use of melting salts which act on the final texture of the product.

WO97/03572 discloses cheese containing products being stabilised with pea starch and water soluble vegetable thickeners. EP0289096 discloses a method for preparing a cheese product by mixing starting substances such as quark, butter and/or cheese and a binding agent based on starch, gelatine and polysaccharide in a quantity of 0.1 to 5% by weight of the cheese product.

There is therefore the need of cheese-based food preparations, having a suitable consistency, which limit as much as possible the use of additives, without prejudice to their industrial processability; moreover, there is the need of cheese-based food preparations which maintain substantially unaltered for the entire requested shelf-life their rheological and structural characteristics; new production processes that make available such products are also required, which may further optimize the structural features thereof.

### Summary of the Invention

Object of the present invention is a cheese-based food preparation, with or without melting salts, particularly adapted to the industrial preparation of semi-finished dairies such as slices, multi portions, single portions, snacks and similar forms. Said preparation comprises cheese, pea starch and vegetable fibers acting as texturizing ingredients and, optionally, additional ingredients used in cheese-based preparations (*e*.*g*. powdered milk or other milk derivatives, sodium chloride, flavorings, etc.). The melting salts may be present as for the traditional processes of melted cheeses production or absent (according to an advantageous embodiment of the invention).

The invention also includes a process for obtaining the food preparation described above. In a preferred embodiment, in the type "without melting salts", the process is characterized by a step of hydration under heating of a mixture of said pea starch and fibers and possible excipients and the subsequent incorporation under heating of the cheese, followed by appropriate cooling and maturation. A second possible process involves homogenizing the cheese and a mixture of said pea starch and fibers and possible excipients without heating, followed by treatment under heating and subsequent appropriate cooling and maturation. The present food preparations in turn are industrially processable and usable as ingredients for the preparation of finished food products. The invention is as defined by the appended claims.

### Description of the drawings

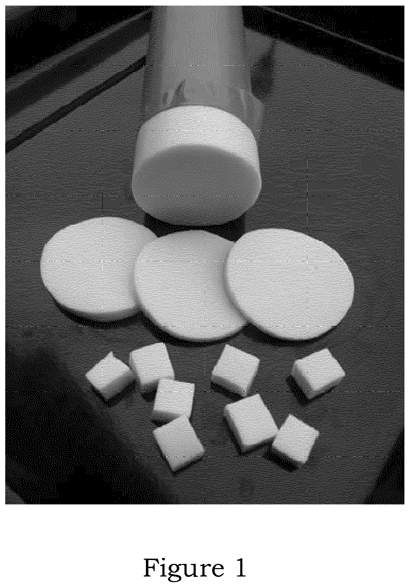

Figure 1: Example of cheese-based food preparation made according to the invention.

### Detailed Description

The invention has for an object the realization of cheese-based food preparations, obtained by a particular formulation of ingredients, comprising cheese, pea starch, and vegetable fibers, with or without the addition of melting salts. The thus obtained preparations have a consistency suitable to be subjected to the industrial processes of slicing, dicing and/or grinding, in particular those intended to realize slices, multi portions, single portions, snacks, etc.

In the present description, with the term "cheese-based food preparation" is meant a cheese-based semi-finished product which can be easily cut into standard portions, which maintains its shape at room temperature, which can be easily manipulated in the course of industrial processes (*e*.*g*. storage, transfer on walkways, loading to hoppers, etc.) with substantial integrity of shape and rheological qualities; such semi-finished product is usable as an ingredient in the preparation of various foods.

With the term "melting salts" (also referred to as "emulsifying salts") are meant the salts commonly used in the industrial production of cheese in order to emulsify fats, isolate casein, so that this latter can act as surfactant itself and, therefore, produce a stable, homogeneous and having the desired consistency product; they are in general phosphates, polyphosphates and/or citrates, in particular of alkali metals and/or alkaline earth metals, and hydrates thereof.

In the preparations according to the invention, the pea starch is present in a weight percent preferably comprised between 3% and 8%.

The vegetable fibers used in the present preparations may be derived from one or more vegetable sources. They comprise at least one insoluble vegetable fiber and at least one soluble vegetable fiber; the solubility of the fiber is understood with respect to water. The weight percent of vegetable fibers in the above preparations is preferably comprised between 1% and 4%. When using soluble and insoluble vegetable fibers, the weight ratio between insoluble and soluble vegetable fibers is comprised between 0.5:1 and 1.5:1, preferably being approximately equal to 1:1.

The insoluble vegetable fibers are preferably selected from wheat fiber (Triticum aestivum), bamboo fiber, sugarcane fiber (Saccharum officinarum), oat fiber, and/or mixtures thereof.

The soluble vegetable fibers are preferably selected from Plantago fiber, such as Plantago ovata and/or Plantago psyllium.

The presence of "real" cheese in the present preparations is a key feature of the present invention: that distinguishes it from any food composition containing foods that only mimic the look, the texture and/or the organoleptic characteristics of cheese, without using the latter. For the purposes of the invention, it is therefore possible to use a wide range of fine cheeses from the point of view of the organoleptic, nutritional or typical provenance characteristics, *e*.*g*. fontal, mozzarella, edammer, cheddar, gouda, emmentaler, gruyere and/or a mixture thereof.

The food preparation of the invention can further comprise one or more of the additional ingredients commonly employed for these products such as water, powdered milk, milk proteins, sodium chloride (NaCl) and flavorings; the melting salts are only optional as, with the product of the present invention, products free of melting salts can advantageously be produced. Common thickeners and gelling agents (carrageenan, guar gum, gelatins, etc.) can be possibly added to the recipe in order to impart desired characteristics or peculiarities (*e*.*g*. the modulation of the structure during the heating of the finished product).

The preparations obtained according to the invention are provided with a suitable consistency to be subjected to the industrial procedures of slicing, dicing or grinding.

The pea starch, together with the vegetable fibers provided according to the invention, has proved able to confer to the obtained product the requested texture, without altering the organoleptic properties of the cheese; the pea starch has also proved to have a high gelling power in the present preparations, further, it showed a neutral taste that, consequently, does not affect the flavor of the finished product.

The insoluble fibers cooperate in improving the consistency of the preparation, due to the network structure they form in the matrix of the cheese, and they also possess a significant water retention capacity both in the final product and during the different production steps for obtaining the same. The soluble fibers cooperate to the matrix elasticity, to water retention. The above vegetable fibers, soluble and insoluble, further give to the preparation (and to the final food containing it) a "healthy" composition appearance and in line with the most current nutritional indications; in the context of a balanced diet and a healthy lifestyle, they cause a variety of beneficial effects on the human organism, such as a generic laxative effect and a regularization of digestion in the intestine, a decreased level of cholesterol associated with low density lipoproteins in the blood stream and/or a decrease in the glucose level in the blood.

The synergy between all the above mentioned components has allowed to realize cheese-based food preparations, even without the use of melting salts, having suitable consistency to be subjected to industrial processes of slicing, dicing or grinding.

The present invention includes a process for the production of the above cheese-based food preparations. In its general sense, the process is characterized by mixing the above mentioned ingredients, with or without melting salts. Moreover, the Applicant has studied a specific embodiment of the process in its variant without melting salts (according to two different methodologies here defined as "Method 1" and "Method 2") able to optimize the characteristics of the industrial processability, increasing the homogeneity and constancy of rheological properties and texture.

METHOD 1: According to this embodiment, the cheese is added under heating to a liquid and very viscous phase (here called "weld") comprising the above mentioned pea starch and fibers, previously prepared by dispersing in water said pea starch and fibers and heating said dispersion to 80-90 °C. In particular, said process, which does not require the use of melting salts, provides the following steps:
a) dispersing in water said pea starch and vegetable fibers;
b) heating under stirring, to a temperature comprised between 80°C and 90°C, the dispersion obtained in a);
c) adding the cheese to the product of b);
d) maintaining the product of c) under stirring, at a temperature comprised between 80°C and 90°C obtaining a single homogeneous and viscous phase;
e) cooling the product of d) to a temperature comprised between 1°C and 6°C, and maintaining it at such temperature for a time period comprised between 2 and 3 days.

During step a) of the process it is possible to add, as an option, further excipients and/or co-formulants commonly used in the field of cheese preparation.

In step b), a preferred range of heating is comprised between 80 °C and 85 °C. The heating to these temperatures can be applied for a relatively short time, *e*.*g*. comprised between 100 and 300 seconds. The step b) gives rise to a homogeneous and viscous liquid phase, also called "weld".

In step c), to the weld formed in b) cheese is added; preferably it is added in the form of small pieces (*e*.*g*. granules, grounded, dried powder), so to facilitate a uniform incorporation. In the case in which the formulation provides for the use of sodium chloride (NaCl), this is preferably added at this stage.

In step d), a preferred range of heating is comprised between 80 °C and 85 °C. The heating to these temperatures can be applied for a relatively short time, *e*.*g*. between 100 and 300 seconds.

All of the above steps a)-d) are carried out keeping the mixture under appropriate stirring. The stirring rate can be conventionally chosen depending on the size of the reactor, the type of stirrer, etc.; as a non-limiting example, it can be comprised, *e.g*. between 300 and 1000 rpm.

A critical feature of the above embodiment of process consists in the fact that, in a first time, a viscous phase (weld) is formed containing the ingredients of the preparation except cheese; only later, cheese is added to said weld. This represents a distinguishing element from the known processes, in which the additional ingredients are added after the cheese has been melted or at most during melting of the cheese.

In step e), the cooling step of the product of d), *i.e.* the time taken to bring the hot homogeneous phase coming from d) to the temperature provided for the step e), has a duration preferably comprised between 30 min and 1 h; the cooling temperature is preferably comprised between 2 °C and 4 °C; the maintenance phase (maturation) to the above mentioned 2-3 days then follows.

METHOD 2: According to this embodiment, without the use of melting salts too, the cheese and the other ingredients provided by the recipe, with the exclusion of pea starch and vegetable fibers, are homogenized at room temperature until obtaining a creamy phase; the homogenization can be carried out by high energy mixing according to known techniques, *e.g*. by the action of a cutter at rates comprised between 1000 and 2000 rpm; the creamy phase thus obtained is then added to a mixture of pea starch and vegetable fibers, said mixture being previously homogenized at room temperature. The whole of the two above mentioned homogenates is heated (under stirring, *e.g*. in a heating cutter, fuser, or other equipment suitable for the purpose) up to the temperature of 80-90 °C, preferably 85-90 °C, then packaged or stored in suitable containers and then cooled to a temperature comprised between 1 °C and 6 °C, keeping it at this temperature for a time period comprised between 2 and 3 days.

The preparations of the invention in the embodiment "with melting salts" can be prepared by known methods.

The cheese-based food preparations of the invention can be used as such as finished foods or, preferably, be used as semi-finished foods in the production of a broad range of cheese containing food products. The above mentioned preparations have shown a significant strength to melt caused by exposure to heat sources: for this reason, they are particularly useful in the manufacture of food products which need a cooking and/or heating phase before consumption, such as crumbed and fried cheese, cordon bleu fillings, cheese sausages, filled bakery products, etc.

The food preparations herein described advantageously allow to operate both with the normal processes involving the use of melting salts, and with the aforementioned innovative mode that allows to avoid the use of melting salts, such as phosphates, polyphosphates or citrates, notoriously unpopular and hardly accepted by the consumer. In addition, where the use of powdered milk and/or milk proteins is expected, these ingredients can be used in quantities smaller than those commonly used, with considerable advantages from the point of view of production costs. The latter advantage remains even in the case of realization of cheese-based food preparations with melting salts where the high structuring effect of the above mentioned ingredients (pea starch and vegetable fibers) allows to obtain products endowed with excellent texture, without use of high amount of milk proteins (*e*.*g*. caseinates), with indisputable economic advantages.

In summary, the present invention provides a new cheese-based food preparation which, in addition to offering advantages compared to the current technology of production of melted cheese (due *e.g*. to the improving of the structure, cost reduction), allows the production of industrial food preparations of high quality, with the possibility of using valuable varieties of fine cheese, without alteration of taste, organoleptic properties and nutritional value, minimizing the use of undesirable additives, possibly eliminating the use of melting salts, and maintaining a consistency suitable for the processing of typical forms of semi-finished products for the food industry (blocks, cubes, tubular sausages, etc.); such semi-finished products are in turn used for the production of products ready to use (products *ready to cook* and *ready to eat*) as well as products for end use such as mini-cheeses, single portions and snacks.

Below, by way of non-limiting example, a characteristic recipe for a cheese-based food preparation free of melting salts made in accordance with the invention is reported.

| **Ingredients** | **% weight** |
|---|---|
| Water | 47.00 |
| Cheese (*e*.*g*. edammer) | 40.00 |
| Powdered skimmed milk | 3.5 |
| Pea starch + insoluble and soluble fibers, total weight (*) | 8.0 |
| Salt | 1.20 |
| Flavours | 0.30 |

| | |
|---|---|
| (* according to the invention) | |

The preparation obtained using the above recipe showed a consistency suitable for slicing, dicing and grinding. The recipe was repeated by varying the type of cheese, then using the edam type cheese (or edammer), fontal and mozzarella. Even in the case of these variants, the obtained preparations showed a consistency suitable for slicing, dicing and grinding. The recipe was also repeated by adding melting salts (sodium citrate and polyphosphates), employing a traditional process which may involve either the initial melting of the cheese with melting salts under heating and the subsequent adding of the other ingredients under heating, or the initial incorporation of all the ingredients in a single phase ("All-In" method) and the subsequent heating/melting up to 90 °C.

## Claims

1. Cheese-based food preparation comprising: cheese, pea starch, and vegetable fibers, wherein said vegetable fibers comprise water insoluble vegetable fibers and water soluble vegetable fibers.

2. Preparation according to claim 1, wherein the weight ratio between insoluble and soluble vegetable fibers is comprised between 0.5:1 and 1.5:1.

3. Preparation according to claim 2, wherein said ratio is 1:1.

4. Preparation according to claims 1-3, wherein said vegetable fibers are present as a whole in a weight percent comprised between 1% and 4%.

5. Preparation according to anyone of claims 1-4, wherein said pea starch is present in a weight percent comprised between 3% and 8%.

6. Preparation according to anyone of claims 1-5, wherein said insoluble vegetable fiber is selected from: wheat fiber, bamboo fiber, sugarcane fiber, oat fiber and mixtures thereof.

7. Preparation according to anyone of claims 1-6, wherein said soluble vegetable fiber is selected from Plantago ovata/Plantago Psyllium fiber.

8. Food preparation according to anyone of claims 1-7 further comprising one or more among water, powdered milk, milk proteins, sodium chloride and flavours.

9. Food preparation according to anyone of claims 1-8, free of melting salts.

10. Use of the cheese-based food preparation described in claims 1-9, for the production of food products.

11. Food product comprising the food preparation described in claims 1-9.

12. Process to obtain a food preparation as defined in claims 1-9 comprising cheese, pea starch, and vegetable fibers, **characterized by** mixing said pea starch, vegetable fibers, cheese and possible excipients, performed without the use of melting salts, comprising the following steps:
a) dispersing in water said pea starch, vegetable fibers and possible excipients;
b) heating under stirring, to a temperature comprised between 80°C and 90°C, the dispersion obtained in a);
c) adding said cheese to the product of b);
d) maintaining the product of c) under stirring, at a temperature comprised between 80°C and 90°C obtaining a single homogeneous and viscous phase;
e) cooling the product of d) to a temperature comprised between 1°C and 6°C, and maintaining it at such temperature for a time period comprised between 2 and 3 days.

13. Process according to claim 12, wherein in step b) the dispersion is heated to a temperature comprised between 80°C and 85°C.

14. Process according to anyone of claims 12-13, wherein in step d) the product of c) is maintained at a temperature comprised between 80°C and 85°C.

15. Process according to anyone of claims 12-14, wherein in step e) said product of d) is cooled to a temperature comprised between 2°C and 4°C.

16. Process according to anyone of claims 12-15, wherein in step c) sodium chloride is added.

17. Process to obtain a food preparation as defined in claims 1-9 comprising cheese, pea starch, and vegetable fibers, **characterized by** mixing said pea starch, vegetable fibers, cheese and possible excipients, performed without the use of melting salts, comprising the following steps:
a) homogenizing at room temperature said cheese and possible excipients;
b) homogenizing at room temperature said pea starch and vegetable fibers;
c) joining the homogenates obtained in a) and b)
d) heating under stirring the product of c) to a temperature comprised between 80°C and 90°C;
e) cooling the product of d) to a temperature comprised between 1°C and 6°C, and maintaining it at such temperature for a time period comprised between 2 and 3 days.

## Patentansprüche

1. Lebensmittelzubereitung auf Käsebasis, umfassend: Käse, Erbsenstärke und Gemüsefasern, wobei die Gemüsefasern wasserunlösliche Gemüsefasern und wasserlösliche Gemüsefasern umfassen.

2. Zubereitung nach Anspruch 1, wobei das Gewichtsverhältnis zwischen unlöslichen und löslichen Gemüsefasern zwischen 0,5:1 und 1,5:1 liegt.

3. Zubereitung nach Anspruch 2, wobei das Verhältnis 1:1 ist.

4. Zubereitung nach den Ansprüchen 1 - 3, wobei die Gemüsefasern insgesamt zu einem Gewichtsanteil vorhanden sind, der zwischen 1 % und 4 % liegt.

5. Zubereitung nach einem der Ansprüche 1 - 4, wobei die Erbsenstärke zu einem Gewichtsanteil vorhanden ist, der zwischen 3 % und 8 % liegt.

6. Zubereitung nach einem der Ansprüche 1 - 5, wobei die unlösliche Gemüsefaser ausgewählt wird aus Weizenfaser, Bambusfaser, Zuckerrohrfaser, Haferfaser und Mischungen davon.

7. Zubereitung nach einem der Ansprüche 1 - 6, wobei die lösliche Gemüsefaser aus Plantago ovata/Plantago psyllium-Faser gewählt wird.

8. Lebensmittelzubereitung nach einem der Ansprüche 1 - 7, ferner umfassend eins oder mehrere von Wasser, Milchpulver, Milchproteinen, Natriumchlorid und Aromen.

9. Lebensmittelzubereitung nach einem der Ansprüche 1 - 8, frei von Schmelzsalzen.

10. Verwendung der in Ansprüchen 1 - 9 beschriebenen Lebensmittelzubereitung auf Käsebasis für die Herstellung von Lebensmittelprodukten.

11. Lebensmittelprodukt, umfassend die in Ansprüchen 1 - 9 beschriebene Lebensmittelzubereitung.

12. Verfahren zum Erhalten einer Lebensmittelzubereitung, wie in den Ansprüchen 1 - 9 definiert, umfassend Käse, Erbsenstärke und Gemüsefasern, **gekennzeichnet durch** Mischen der Erbsenstärke, Gemüsefasern, des Käses und möglicher Hilfsstoffe, durchgeführt ohne die Verwendung von Schmelzsalzen, umfassend die folgenden Schritte:
a) Dispergieren der Erbsenstärke, Gemüsefasern und möglichen Hilfsstoffe in Wasser;
b) Unter Rühren Erhitzen der in a) erhaltenen Dispersion auf eine Temperatur zwischen 80 °C und 90 °C;
c) Zugabe des Käses zum Produkt von b);
d) Unter Rühren Halten des Produkts von c) bei einer Temperatur zwischen 80 °C und 90 °C, wobei eine einzige, homogene und viskose Phase erhalten wird;
e) Kühlen des Produkts von d) auf eine Temperatur zwischen 1 °C und 6 °C und Halten des Produkts bei dieser Temperatur für einen Zeitraum, der zwischen 2 und 3 Tagen liegt.

13. Verfahren nach Anspruch 12, wobei in Schritt b) die Dispersion auf eine Temperatur zwischen 80 °C und 85 °C erhitzt wird.

14. Verfahren nach einem der Ansprüche 12 - 13, wobei in Schritt d) das Produkt von c) bei einer Temperatur zwischen 80 °C und 85 °C gehalten wird.

15. Verfahren nach einem der Ansprüche 12 - 14, wobei in Schritt e) das Produkt von d) auf eine Temperatur zwischen 2 °C und 4 °C gekühlt wird.

16. Verfahren nach einem der Ansprüche 12 - 15, wobei in Schritt c) Natriumchlorid zugegeben wird.

17. Verfahren zum Erhalten einer Lebensmittelzubereitung wie in den Ansprüchen 1 - 9 definiert, umfassend Käse, Erbsenstärke und Gemüsefasern, **gekennzeichnet durch** Mischen der Erbsenstärke, Gemüsefasern, des Käses und der möglichen Zusatzstoffe, durchgeführt ohne die Verwendung von Schmelzsalzen, umfassend die folgenden Schritte:
a) Homogenisieren des Käses und der möglichen Zusatzstoffe bei Raumtemperatur;
b) Homogenisieren der Erbsenstärke und Gemüsefasern bei Raumtemperatur;
c) Zusammenfügen der in a) und b) erhaltenen Homogenate;
d) Unter Rühren Erhitzen des Produkts von c) auf eine Temperatur zwischen 80 °C und 90 °C;
e) Kühlen des Produkts von d) auf eine Temperatur zwischen 1 °C und 6 °C, und Halten des Produkts bei dieser Temperatur für einen Zeitraum, der zwischen 2 und 3 Tagen liegt.

## Revendications

1. Préparation alimentaire à base de fromage comprenant : du fromage, de l'amidon de pois et des fibres végétales, dans laquelle lesdites fibres végétales comprennent des fibres végétales insolubles dans l'eau et des fibres végétales solubles dans l'eau.

2. Préparation selon la revendication 1, dans laquelle le rapport en poids entre les fibres végétales insolubles et solubles est compris entre 0,5/1 et 1,5/1.

3. Préparation selon la revendication 2, dans laquelle ledit rapport est de 1/1.

4. Préparation selon les revendications 1 à 3, dans laquelle lesdites fibres végétales sont présentes dans leur ensemble dans un pourcentage en poids compris entre 1 % et 4 %.

5. Préparation selon l'une quelconque des revendications 1 à 4, dans laquelle ledit amidon de pois est présent dans un pourcentage en poids compris entre 3 % et 8 %.

6. Préparation selon l'une quelconque des revendications 1 à 5, dans laquelle ladite fibre végétale insoluble est sélectionnée à partir : d'une fibre de blé, d'une fibre de bambou, d'une fibre de cane à sucre, d'une fibre d'avoine et un de leurs mélanges.

7. Préparation selon l'une quelconque des revendications 1 à 6, dans laquelle ladite fibre végétale soluble est sélectionnée à partir d'une fibre de plantago ovata/plantago psyllium.

8. Préparation alimentaire selon l'une quelconque des revendications 1 à 7 comprenant en outre un ou plusieurs parmi l'eau, le lait en poudre, les protéines de lait, le chlorure de sodium et les arômes.

9. Préparation alimentaire selon l'une quelconque des revendications 1 à 8, exempte de sels fondants.

10. Utilisation de la préparation alimentaire à base de fromage décrite dans les revendications 1 à 9, pour la production de produits alimentaires.

11. Produit alimentaire comprenant la préparation alimentaire décrite dans les revendications 1 à 9.

12. Procédé pour obtenir une préparation alimentaire telle que définie dans les revendications 1 à 9, comprenant du fromage, de l'amidon de pois et des fibres végétales, **caractérisé par** le mélange desdits amidon de pois, fibres végétales, fromage et de possibles excipients, réalisé sans l'utilisation de sels fondants, comprend les étapes suivantes :
a) disperser dans l'eau lesdits amidon de pois, fibres végétales et possibles excipients ;
b) chauffer en remuant, jusqu'à une température comprise entre 80 °C et 90 °C, la disposition obtenue en a) ;
c) ajouter ledit fromage au produit de b) ;
d) maintenir le produit de c) en remuant, à une température comprise entre 80 °C et 90 °C obtenant une seule phase homogène et visqueuse ;
e) refroidir le produit de d) jusqu'à une température comprise entre 1 °C et 6 °C, et le maintenir à une telle température pendant un laps de temps compris entre 2 et 3 jours.

13. Procédé selon la revendication 12, dans lequel à l'étape b) la dispersion est chauffée jusqu'à une température comprise entre 80 °C et 85 °C.

14. Procédé selon l'une quelconque des revendications 12 et 13, dans lequel à l'étape d) le produit de c) est maintenu à une température comprise entre 80 °C et 85 °C.

15. Procédé selon l'une quelconque des revendications 12 à 14, dans lequel à l'étape e) ledit produit de d) est refroidi jusqu'à une température comprise entre 2 °C et 4 °C.

16. Procédé selon l'une quelconque des revendications 12 à 15, dans lequel à l'étape c) du chlorure de sodium est ajouté.

17. Procédé pour obtenir une préparation alimentaire telle que définie dans les revendications 1 à 9, comprenant du fromage, de l'amidon de pois et des fibres végétales, **caractérisé par** le mélange desdits amidon de pois, fibres végétales, fromage et possibles excipients, réalisé sans l'utilisation de sels fondants, comprend les étapes suivantes :
a) homogénéiser à température ambiante lesdits fromage et possibles excipients ;
b) homogénéiser à température ambiante lesdits amidon de pois et fibres végétales ;
c) réunir les homogénats obtenus en a) et b) ;
d) chauffer en remuant le produit de c) jusqu'à une température comprise entre 80 °C et 90 °C ;
e) refroidir le produit de d) jusqu'à une température comprise entre 1 °C et 6 °C, et le maintenir à une telle température pendant un laps de temps compris entre 2 et 3 jours.
